Europäisches Patentamt

European Patent Office

Office européen des brevets

(19)

(11) **EP 1 691 558 A2**

(12) **EUROPEAN PATENT APPLICATION**

(43) Date of publication:
    **16.08.2006 Bulletin 2006/33**

(51) Int Cl.:
    *H04N 7/26* (2006.01)    *G06T 5/20* (2006.01)

(21) Application number: **06101277.9**

(22) Date of filing: **03.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.02.2005 FR 0550410**

(71) Applicant: **Nextream France**
**95800 Cergy Saint-Christophe (FR)**

(72) Inventors:
• **Babonneau, Jean-Yves**
**92648 Boulogne Cedex (FR)**

• **Maheo, Florent**
**92648 Boulogne Cedex (FR)**
• **Moronta, Juan**
**92648 Boulogne Cedex (FR)**
• **Touchais, Dominique**
**92648 Boulogne Cedex (FR)**

(74) Representative: **Le Dantec, Claude**
**Thomson,**
**46, Quai Alphonse Le Gallo**
**92100 Boulogne-Billancourt (FR)**

(54) **Device and method for pre-processing before encoding of a video sequence**

(57)     The invention relates to a device for pre-processing before encoding of a sequence of images including:

- means (2) of storing the current frame (T) and at least two preceding frames (T-1, T-2),
- means (3, 4, 5) of defining a vicinity for each point (P) of the current frame (T) and for each corresponding point (P', P'') in the two preceding frames (T-1, T-2),
- means (6, 7) of measuring the motion of the current point (P) relative to its position in the two preceding frames (T-1, T-2) so as to detect whether the current point is in motion or in a static zone.

According to the invention, the device includes:

- means (14) of performing a spatial smoothing on the current point if the current point is in motion,
- means (12, 14) of performing a space-time smoothing if the current point is located in a static zone.

Fig 3

**Description**

The invention relates to a pre-processing device and method before encoding of a sequence of video images.

Image coding devices are all the more effective if they encode images having a reduced temporal or spatial entropy.

They are often therefore associated with devices for pre-processing images in which the images are processed to provide a better coding.

As is known, the pre-processing devices designed to reduce the temporal entropy of a video sequence use linear or nonlinear filters, which increase the temporal redundancy image by image, so as to reduce the coding cost of the predicted or interpolated images.

The main drawbacks of these methods are:

- reduced temporal definition which is reflected in smoothing effects on uniform areas,
- blurring effects on objects,
- duplication of certain outlines in the event of strong motions.

Motion-compensated filters provide a degree of improvement, but there are risks of artifacts in the event of poor motion estimation.

In the same way, the pre-processing devices designed to reduce the spatial entropy of a video sequence use linear or non-linear filters which reduce and even eliminate the high-frequency components mainly responsible for the image coding cost in intramode. There are many filters, among them the one- or two-dimensional low-pass filters, the Nagao filters, averaging filters and median filters.

The main drawbacks of these methods are:

- a reduction in spatial definition that is too visible, in particular in the vertical axis, due to the fact that each frame of an interlaced video has only half the vertical resolution of an image,
- blurring effects on the objects,
- degraded outlines.

The invention proposes to overcome at least one of the abovementioned drawbacks.

To this end, the invention proposes a device for pre-processing before encoding of a sequence of images including:

- means of storing the current frame and at least two preceding frames,
- means of defining a vicinity for each point of the current frame and for each corresponding point in the two preceding frames,
- means of measuring the motion of the current point relative to its position in the two preceding frames so as to detect whether the current point is in motion or in a static zone.
  According to the invention, the device includes
- means of performing a spatial smoothing on the current point if the current point is in motion,
- means of performing a space-time smoothing if the current point is located in a static zone.

Advantageously, the device includes means of increasing the severity of the smoothing according to the amplitude of the luminance in the vicinity of the current point.

Preferably, the device includes:

- means of calculating an average luminance in the vicinity of the current point in the current frame,
- means of calculating a cumulative average luminance in the vicinity of the current point in the current frame and in the preceding frame,
- means of calculating a cumulative average luminance in the vicinity of the current point in the current frame and in the frame preceding the preceding frame,
- means of calculating a cumulative average luminance in the vicinity of the current point in the current frame, in the preceding frame and in the frame preceding the preceding frame,
- means of selecting one of said averages according to the measurement of motion of the current point.

According to a preferred embodiment, the device includes means of comparing said selected average and the luminance value of the current point of the current frame with predetermined thresholds.

Preferably, the means of increasing the severity of the smoothing modify the luminance value of the current point according to a factor dependent on the comparison of said selected average and the value of the current point of the current frame with predetermined thresholds.

According to the preferred embodiment, the means of increasing the severity of the filtering assign the current point a new luminance value dependent on the luminance value of the current point, of said coefficient and of said selected average.

The invention also relates to a method of pre-processing before encoding of a sequence of images including:

- a step for storing the current frame and at least two preceding frames,
- a step for determining a vicinity for each point of the current frame and for each corresponding point in the two preceding frames,
- a step for measuring the motion of the current point relative to its position in the two preceding frames so as to detect whether the current point is in motion or in a static zone.
  According to the invention, the method includes:
- a step for spatial smoothing on the current point if the current point is in motion,
- a step for space-time smoothing if the current point is located in a static zone.

The invention will be better understood and illustrated by means of exemplary embodiments and advantageous implementations, by no means limiting, with reference to the appended figures in which:

- Figure 1 represents a device for detecting the static zones,
- Figure 2 represents the windows used in the current and preceding frames to determine the value of the current point,
- Figure 3 represents a device of a preferred embodiment of the invention,
- Figure 4 represents an operating flow diagram of a multiplexing module.

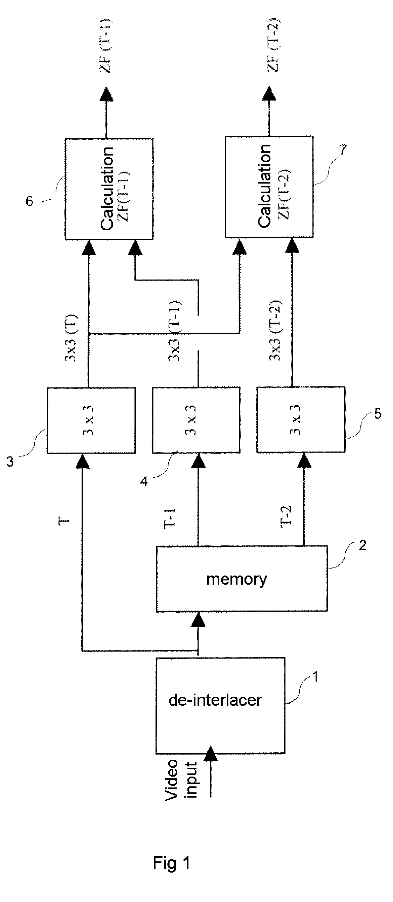

Figure 1 represents a static zone detection device.

The detection of the static zones is performed on the basis of the luminance information.

The device includes a de-interlacer 1. The de-interlacer 1 converts the video signal at the input into a progressive signal, by doubling the number of lines per frame using a known de-interlacing system which relies on three consecutive frames. This is advantageously used to obtain progressive frames which each contain the complete vertical definition of an image and it is then possible to envisage frame-by-frame comparisons since the respective lines of two consecutive frames are now spatially in the same position.

The consecutive frames are stored in a memory 2 in order to be used subsequently to determine the static zones. The memory 2 stores the frames one after the other, permanently retaining at least the last two frames received from the de-interlacer 1.

Then, for each point of the current frame T, of the immediately preceding frame T-1 and of the frame T-2, the respective means 3, 4 and 5 calculate a window centred on the current point.

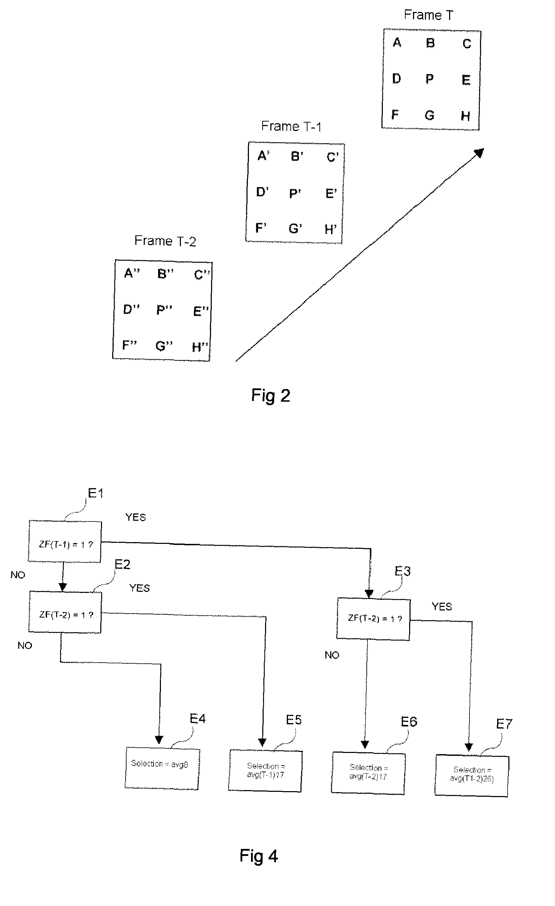

The size of the window is three pixels in the horizontal direction and three pixels in the vertical direction for all three frames. These three windows are illustrated in Figure 2. P represents the current point of the current frame T. P' and P" represent the points of the same coordinates as the current point respectively in the frames T-1 and T-2.

The window of the current frame F(T) is made up:

- on the line above the current point, from left to right, of the points A, B, C,
- on the line of the current point D, to the left of the current point and E, to the right of the current point,
- on the line below the current point, from left to right, the points F, G and H.

The window of the frame T-1 called F(T-1) is made up of the points A', B', C', D', P', E', F', G', H', spatially corresponding respectively to the points A, B, C, D, P, E, F, G, H.

The window of the frame T-2 called F(T-2) is made up of the points A", B", C", D", P", E", F", G", H" spatially corresponding respectively to the points A, B, C, D, P, E, F, G, H.

A module 6 calculates ZF(T-1) which corresponds to determining the static zone between the frame T-1 and the frame T.

A module 7 calculates ZF(T-2) which corresponds to determining the static zone between the frame T-2 and the frame T.

To obtain, ZF(T-1) and ZF(T-2), the following operations are performed:

$$R1 = \frac{\left(\left|A - A'\right| + \left|B - B'\right| + \left|C - C'\right| + \left|D - D'\right| + \left|E - E'\right| + \left|F - F'\right| + \left|G - G'\right| + \left|H - H'\right|\right)}{8}$$

$$R2 = \frac{\left(\left|A - A''\right| + \left|B - B''\right| + \left|C - C''\right| + \left|D - D''\right| + \left|E - E''\right| + \left|F - F''\right| + \left|G - G''\right| + \left|H - H''\right|\right)}{8}$$

If $R1 <$ *ThresholdS*1 then $ZF(T$-1) =1 and the current point P is located in a static zone relative to T-1, otherwise $ZF(T$-1) = 0.

If $R2 <$ *ThresholdS*2 then $ZF(T$-2) =1 and the current point P is located in a static zone relative to T-2, otherwise $ZF(T$-2) = 0.

Preferably, the following can be taken:

$$Threshold1 = threshold2 = 8$$

Then, the values of ZF(T-1) and ZF(T-2) are used to calculate the new value of the current point P.

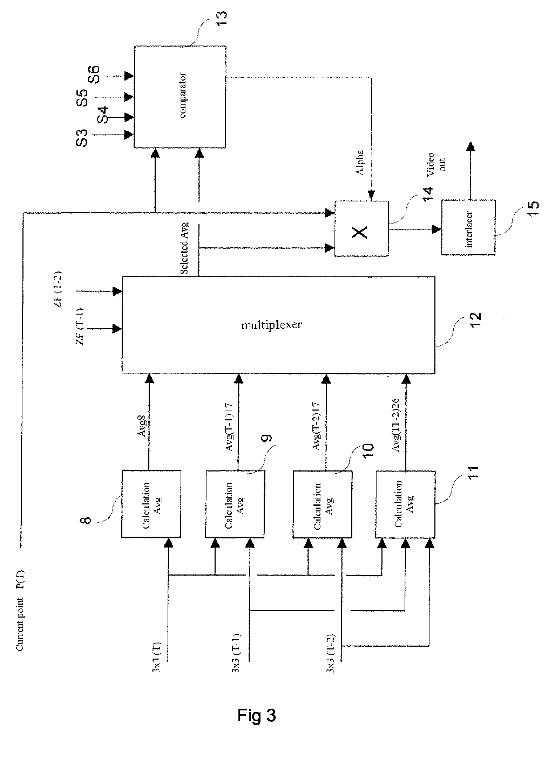

To this end, Figure 3 represents a device for calculating the new value of the current point P.

A means 8 receives as input the points of the window F(T) surrounding the current point P and calculates a value AVG8 based on the luminance value of these points, without the current point:

$$AVG8 = \frac{A + B + C + D + E + F + G + H}{8}$$

A means 9 receives as input the points of the window F(T) surrounding the current point P of the current frame T and the corresponding points of the preceding frame T-1 in the window F(T-1). It calculates an average AVG(T-1)17 from these values:

$$AVG(T - 1)17 = \frac{(A + B + C + D + E + F + G + H) + (A' + B' + C' + D' + P' + E' + F' + G' + H')}{17}$$

A means 10 receives as input the points of the window F(T) surrounding the current point P of the current frame T and the corresponding points in the window F(T-2). It calculates an average AVG(T-2)17 from these values:

$$AVG(T - 2)17 = \frac{(A + B + C + D + E + F + G + H) + (A'' + B'' + C'' + D'' + P'' + E'' + F'' + G'' + H'')}{17}$$

A means 11 receives as input the points of the window F(T) surrounding the current point P of the current frame T and the corresponding points of the window F(T-1) and of the window F(T-2). It calculates an average AVG(T-1-2)26 from these values:

$$AVG(T-1-2)26 = \frac{(A+B+C+D+E+F+G+H)}{26} + \frac{(A'+B'+C'+D'+P'+E'+F'+G'+H')}{26} +$$

$$\frac{(A''+B''+C''+D''+P''+E''+F''+G''+H'')}{26}$$

The results obtained are transmitted to decision means 12, which also receive as input the static zones ZF(T-1) and ZF(T-2) and produce the signal Avg as output.

The decision means multiplex the various averages in accordance with the static zone values according to the algorithm given in Figure 4.

In a step E1, a test is run on the value of ZF(T-1).

If ZF(T-1) is "1", then the procedure moves on to a step E3. In this step E3, ZF(T-2) is tested. If ZF(T-2) is "1", then the procedure goes on to the step E7 in which Avg is assigned the value AVG(T-1-2)26, otherwise, if ZF(T-2) is "0", then the procedure goes on to the step E6 in which Avg is assigned the value AVG(T-2)17.

If, in the step E1, ZF(T-1) is "0", then the procedure goes on to a step E2 and ZF(T-2) is tested. If ZF(T-2) is "1", then the procedure goes on to the step E5 in which Avg is assigned the value AVG(T-1)17. Otherwise, if ZF(T-2) is "0", then the procedure goes on to the step E4 in which Avg is assigned the value AVG8.

With reference to Figure 3, the output of the decision means 12 is transmitted to a comparator 13. The comparator 13 also receives as input threshold values S3, S4, S5 and S6.

Depending on the comparisons between the value of the current point and the thresholds and the average value and the thresholds, a factor $\alpha$ defined in the table below, is deduced from this.

| Current point value | Selected average value | $\alpha$ |
|---|---|---|
| <S3 | < S3 | 0.125 |
| <S4 & >S3 | < S3 | 0.25 |
| <S5 & >S4 | < S4 | 0.5 |
| <S6 & >S5 | < S5 | 0.75 |
| Other cases | Other cases | 1 |

The threshold values are preferably defined as follows:

S3=60
S4=120
S5=180
S6=240

Means 14 then modify the value of the current point according to $\alpha$ and the selected average value. The new value of P, denoted $P_{new}$ is then defined as follows:

$$P_{new} = \alpha \times P + (1-\alpha)Avg$$

Thus, when the point P is in motion relative to the two preceding frames T-1 and T-2, that is, it is not considered as being in a static zone relative to the preceding frames ((ZF(T-1)=0 and ZF(T-2)=0), a spatial smoothing is performed by modifying the value of the current point P and assigning it a new value taking into account the value of the points in its vicinity (AVG8).

When the current point P is in motion relative to the preceding frame T-1 only, that is, it is considered as being in motion relative to T-1, but not relative to T-2, a space-time smoothing is performed by modifying the value of the current point P and assigning it a new value taking into account the value of the points in its vicinity F(T) and the value of the points in the vicinity F(T-1)) of the current point P' in the preceding frame (AVG(T-1)17).

When the current point P is not in motion relative to the preceding frame T-1 but relative to T-2, the frame preceding the preceding frame, a space-time smoothing is performed by modifying the value of the current point P and assigning it a new value taking into account the value of the points in its vicinity F(T) and the value of the points in the vicinity F(T-2)) of the current point P" in the frame T-2 (AVG(T-2)17).

When the current point P is not in motion relative to the preceding frame T-1, nor relative to T-2, the frame preceding the preceding frame, a space-time smoothing is performed by modifying the value of the current point P and assigning it a new value taking into account the value of the points in its vicinity F(T), the value of the points in the vicinity F(T-1) of the current point in the frame T-1 and the value of the points in the vicinity F(T-2) of the current point in the frame T-2 (AVG(T-1-2)26).

Next, the smoothing is weighed according to the average values by the factor $\alpha$. In fact, a psycho-visual characteristic is applied, according to which the smoothing of an object becomes more difficult to perceive by eye as its luminance is weak. Thus, the severity of the smoothing depends on this average luminance value.

An interlacing module 15 is used to recover the video frames processed in interlaced form. The duly processed video frame is then transmitted to an encoding device in order to be encoded.

**Claims**

1. Device for pre-processing before encoding of a sequence of images including:

   - means (2) of storing the current frame (T) and at least two preceding frames (T-1, T-2),
   - means (3, 4, 5) of defining a vicinity (F(T), F(T-1)), F(T-2)) for each point (P) of the current frame (T) and for each corresponding point (P',P") in the two preceding frames (T-1, T-2),
   - means (6, 7) of measuring the motion of the current point (P) relative to its position in the two preceding frames (T-1, T-2) so as to detect whether the current point is in motion or in a static zone,
   **characterized in that** it includes
   - means (14) of performing a spatial smoothing on the current point if the current point is in motion,
   - means (12, 14) of performing a space-time smoothing if the current point is located in a static zone.

2. Device according to Claim 1, **characterized in that** it includes means (13) of increasing the severity of the smoothing according to the amplitude of the luminance in the vicinity of the current point (P).

3. Device according to one of Claims 1 or 2, **characterized in that** it includes:

   - means (8) of calculating an average luminance in the vicinity (F(T)) of the current point (P) in the current frame (T),
   - means (9) of calculating a cumulative average luminance in the vicinity (F(T), F(T-1)) of the current point (P) in the current frame (T) and in the preceding frame (T-1),
   - means (10) of calculating a cumulative average luminance in the vicinity (F(T), F(T-2)) of the current point in the current frame and in the frame (T-2) preceding the preceding frame (T-1),
   - means (11) of calculating a cumulative average luminance in the vicinity (F(T), F(T-1), F(T-2)) of the current point (P) in the current frame (T), in the preceding frame (T-1) and in the frame (T-2) preceding the preceding frame (T-1),
   - means (12) of selecting one of said averages according to the measurement of motion (ZF(T-1), ZF(T-2)) of the current point (P).

4. Device according to Claim 3, **characterized in that** it includes means (13) of comparing said selected average and the luminance value of the current point (P) of the current frame (T) with predetermined thresholds (S3, S4, S5, S6).

5. Device according to Claims 3 and 4, **characterized in that** the means (13) of increasing the severity of the smoothing modify the luminance value of the current point (P) according to a factor ($\alpha$) dependent on the comparison of said selected average and the value of the current point (P) of the current frame (T) with said predetermined thresholds (S3, S4, S5, S6).

6. Device according to Claim 5, **characterized in that** the means (13) of increasing the severity of the filtering assign the current point (P) a new luminance value dependent on the luminance value of the current point (P), of said coefficient ($\alpha$) and of said selected average.

7. Method of pre-processing before encoding of a sequence of images including:

   - a step for storing the current frame (T) and at least two preceding frames (T-1, T-2),

- a step for determining a vicinity (F(T), F(T-1)), F(T-2)) for each point (P) of the current frame (T) and for each corresponding point (P', P'') in the two preceding frames,
- a step for measuring the motion of the current point (P) relative to its position in the two preceding frames (T-1, T-2) so as to detect whether the current point (P) is in motion or in a static zone,

**characterized in that** it includes

- a step for spatial smoothing on the current point if the current point (P) is in motion,
- a step for space-time smoothing if the current point (P) is located in a static zone.

Fig 1

Frame T

| A | B | C |
| D | P | E |
| F | G | H |

Frame T-1

| A' | B' | C' |
| D' | P' | E' |
| F' | G' | H' |

Frame T-2

| A'' | B'' | C'' |
| D'' | P'' | E'' |
| F'' | G'' | H'' |

Fig 2

E1

ZF(T-1) = 1 ?

YES

NO

E2

ZF(T-2) = 1 ?

YES

NO

E3

ZF(T-2) = 1 ?

YES

NO

E4

Selection = avg8

E5

Selection = avg(T-1)17

E6

Selection = avg(T-2)17

E7

Selection = avg(T1-2)26)

Fig 4

Fig 3